# EUROPEAN PATENT APPLICATION

(11) **EP 4 804 647 A1**
(43) Date of publication of application: **09.09.2026**
(21) Application number: 24887891.0
(22) Date of filing: 04.11.2024
(51) Int. Cl.: H04W 52/04

(54) **POWER DETERMINATION METHOD AND RELATED PRODUCT**

(30) Priority: 10.11.2023 CN 202311497864
(71) Applicant: Huawei Technologies Co., Ltd., Shenzhen, Guangdong 518129 (CN)
(72) Inventor: CHEN, Ying, Shenzhen, Guangdong 518129 (CN); DU, Yinggang, Shenzhen, Guangdong 518129 (CN); QIAO, Yunfei, Shenzhen, Guangdong 518129 (CN); TIE, Xiaolei, Shenzhen, Guangdong 518129 (CN)
(74) Representative: Thun, Clemens
(86) International application number: PCT/CN2024/129623
(87) International publication number: WO 2025/098279

(57) **Abstract**

A power determining method and a related product are disclosed. A terminal device receives an indication of a network device, where the indication indicates that a transmission mode for data scheduling is a high-power mode, so that the terminal device can perform communication in the high-power mode based on the indication. Therefore, the terminal device can flexibly perform high-power sending.

## Description

This application claims priority to Chinese Patent Application No. 202311497864.4, filed with the China National Intellectual Property Administration on November 10, 2023 and entitled "POWER DETERMINING METHOD AND RELATED PRODUCT", which is incorporated herein by reference in its entirety.

### TECHNICAL FIELD

This application relates to the field of communication technologies, and in particular, to a power determining method and a related product.

### BACKGROUND

Communication of a terminal device needs to meet a requirement of a specific absorption rate (specific absorption rate, SAR), that is, a requirement for radiation to a human body. Therefore, a high power for uplink sending of the terminal device is required not to exceed a proportion. Currently, a high-power terminal device is defined on a time division duplexing (time division duplexing, TDD) frequency band, but a frequency division duplexing (frequency division duplexing, FDD) terminal device is not specified. In FDD, because the uplink sending and the downlink sending use different frequency bands, the uplink sending and the downlink sending can be performed simultaneously. Because the terminal device can continuously perform the uplink sending, using a TDD decision-making manner may result in an overly conservative sending power of the terminal device. For example, if an observation period of the SAR is 6 minutes, the terminal device may continuously perform uplink sending for 3 minutes and perform downlink receiving for 3 minutes. If the TDD manner is used, the terminal device can only perform uplink sending with a proportion of 50% or less every 10 ms. Therefore, a network side does not plan data sending over a long period of time, but schedules current data sending based on current services.

In view of this, how to flexibly determine a sending power of a terminal device is a problem that needs to be resolved currently.

### SUMMARY

This application provides a power determining method and a related product, to flexibly determine a sending power of a terminal device.

According to a first aspect, a power determining method is provided. The method is implemented by a terminal device, or a chip or a circuit used in a terminal device.

The method includes: receiving first indication information, where the first indication information indicates a power mode for data scheduling, or indicates a third power level; the power mode includes a first power mode or a second power mode, where the first power mode corresponds to a first power level, the second power mode corresponds to a second power level, and the first power level is higher than the second power level; determining a fourth power level based on the first indication information; and sending a first signal at the fourth power level.

According to the method, the terminal device receives an indication of a network device, where the indication indicates a power mode or a power level for data scheduling, so that the terminal device can determine the power level based on the indication and perform communication. Therefore, the terminal device can flexibly determine the sending power.

In a possible implementation, the method further includes: sending second indication information, where the second indication information indicates whether the first power mode is supported, or indicates a fifth power level.

In this implementation, the terminal device reports the capability, to avoid a scheduling failure caused because the network device unilaterally schedules the terminal device to perform sending at a high power, but the terminal device does not support sending high-power sending; or to avoid reduction of communication efficiency and reliability caused because the network device unilaterally schedules the terminal device to perform sending in a default second power mode, but the terminal device can actually support the high-power sending. The terminal device may further indicate a specific power level to the network device, so that the network device can determine the foregoing first indication information more accurately.

In another possible implementation, the method further includes: sending first information, where the first information includes at least one of the following: a first remaining duration for which transmission is performed in the first power mode within a first time period, a second remaining duration for which the transmission is not allowed in the first power mode within the first time period, and a third remaining duration for which scheduling of uplink sending is not allowed within the first time period; and the first information is obtained based on proportion information of transmission in the first power mode within the first time period.

In this implementation, the terminal device can accurately count how long a channel or a signal is sent in the first power mode within the first time period, to obtain, based on the proportion information of transmission in the first power mode within the first time period: the first remaining duration for which the transmission can be still performed in the first power mode within a first time period, the second remaining duration for which the transmission is not allowed in the first power mode within the first time period, or the third remaining duration for which scheduling of uplink sending is not allowed within the first time period. The terminal device reports the first information, so that high-power sending of the terminal device can meet a regulatory requirement.

In still another possible implementation, the first information is based on a high reference power level.

In this implementation, the high reference power level is introduced as a normalization parameter for reporting and indication, so that signaling indication can be unified to some extent, and signaling overheads can be reduced.

In still another possible implementation, the method further includes: sending third indication information, where the third indication information indicates a step size for adjusting the fourth power level, and/or a power headroom of a terminal device.

In this implementation, the terminal device reports the step size for adjusting the fourth power level, and/or the power headroom of the terminal device, so that operations of adjusting a power level by the terminal device and the network device are consistent, thereby improving reliability of data scheduling.

In still another possible implementation, the first indication information is carried in downlink control information or a medium access control control element.

In still another possible implementation, the first indication information further includes at least one of the following: an effective moment of the fourth power level indicated by the first indication information, an effective duration of the fourth power level indicated by the first indication information, and a start time and a duration of a timer, where the timer is configured to determine a time for performing data scheduling based on the first indication information.

In this implementation, the effective moment of the fourth power level indicated by the first indication information, the effective duration of the fourth power level indicated by the first indication information, or the start time and the duration of the timer are stipulated, so that the operations of adjusting the power level by the terminal device and the network device are consistent, thereby improving reliability of data scheduling.

According to a second aspect, a power determining method is provided. The method is implemented by a network device, or a chip or a circuit used in a network device.

The method includes: sending first indication information, where the first indication information indicates a power mode for data scheduling, or indicates a third power level; the power mode includes a first power mode or a second power mode, the first power mode corresponds to a first power level, the second power mode corresponds to a second power level, and the first power level is higher than the second power level; and receiving a first signal, where the first signal is sent at a fourth power level, and the fourth power level is determined based on the first indication information.

According to the method, the network device may send an indication to the terminal device, where the indication indicates a power mode or a power level for data scheduling, so that the terminal device can determine the power level based on the indication and perform communication. Therefore, the terminal device can flexibly determine the sending power.

In a possible implementation, the method further includes: receiving second indication information, where the second indication information indicates whether the first power mode is supported, or indicates a fifth power level; and determining the first indication information based on the second indication information.

In this implementation, the capability reported by the terminal device is received, to avoid a scheduling failure caused because the network device unilaterally schedules the terminal device to perform sending at a high power, but the terminal device does not support high-power sending; or to avoid reduction of communication efficiency and reliability caused because the network device unilaterally schedules the terminal device to perform sending in a default second power mode, but the terminal device can actually support the high-power sending. The terminal device may further indicate a specific power level to the network device, so that the network device can determine the foregoing first indication information more accurately.

In another possible implementation, the method further includes: receiving first information, where the first information includes at least one of the following: a first remaining duration for which transmission is performed in the first power mode within a first time period, a second remaining duration for which the transmission is not allowed in the first power mode within the first time period, and a third remaining duration for which scheduling of uplink sending is not allowed within the first time period; and the first information is obtained based on proportion information of transmission in the first power mode within the first time period; and determining the first indication information based on the first information.

In this implementation, the network device receives the first information reported by the terminal device, so that the network device schedules the terminal device to perform sending in the power mode or the power level indicated by the first indication information, to meet the regulatory requirement.

In still another possible implementation, the first information is based on a high reference power level.

In this implementation, the high reference power level is introduced as a normalization parameter for reporting and indication, so that signaling indication can be unified to some extent, and signaling overheads can be reduced.

In still another possible implementation, the method further includes: receiving third indication information, where the third indication information indicates a step size for adjusting the fourth power level, and/or a power headroom of a terminal device; and determining the first indication information based on the third indication information.

In this implementation, the step size for adjusting the fourth power level and/or the power headroom of the terminal device that is reported by the terminal device is received, so that operations of adjusting a power level by the terminal device and the network device are consistent, thereby improving reliability of data scheduling.

In still another possible implementation, the first indication information is carried in downlink control information or a medium access control control element.

In still another possible implementation, the first indication information further includes at least one of the following: an effective moment of the fourth power level indicated by the first indication information, an effective duration of the fourth power level indicated by the first indication information, and a start time and a duration of a timer, where the timer is configured to determine a time for performing data scheduling based on the first indication information.

In this implementation, the effective moment of the fourth power level indicated by the first indication information, the effective duration of the fourth power level indicated by the first indication information, or the start time and the duration of the timer are stipulated, so that the operations of adjusting the power level by the terminal device and the network device are consistent, thereby improving reliability of data scheduling.

According to a third aspect, a communication apparatus is provided, configured to implement the power determining method in the foregoing first aspect or any one of the implementations of the first aspect. The apparatus may be a terminal device, or may be a module (for example, a processor, a chip, or a chip system) used in the terminal device, and may be further a logical node, a logical module, or software that can implement all or part of the terminal device. In an implementation, the communication apparatus may include a sending unit and a receiving unit, and may further include a processing unit. The sending unit and the receiving unit may be independent, or may be combined (which may be referred to as a "transceiver unit").

According to a fourth aspect, a communication apparatus is provided, configured to implement the power determining method in the foregoing second aspect or any one of the implementations of the second aspect. The apparatus may be a network device, or may be a module (for example, a processor, a chip, or a chip system) used in a network device, and may be further a logical node, a logical module, or software that can implement all or some of functions of the network device. In an implementation, the communication apparatus may include a sending unit and a receiving unit, and may further include a processing unit. The sending unit and the receiving unit may be independent, or may be combined (which may be referred to as a "transceiver unit").

In a possible implementation, the communication apparatus in the foregoing third aspect to the fourth aspect includes a module for respectively performing the method in any one of the foregoing first aspect and the second aspect or in any one of the implementations.

When the communication apparatus is configured to implement the method in the first aspect or any one of the implementations of the first aspect, the transceiver unit is configured to receive first indication information, where the first indication information indicates a power mode for data scheduling, or indicates a third power level; the power mode includes a first power mode or a second power mode, the first power mode corresponds to a first power level, the second power mode corresponds to a second power level, and the first power level is higher than the second power level; the processing unit is configured to determine a fourth power level based on the first indication information; and the transceiver unit is further configured to send a first signal at the fourth power level.

Optionally, the transceiver unit is further configured to send second indication information, where the second indication information indicates whether the first power mode is supported, or indicates the fifth power level.

Optionally, the transceiver unit is further configured to send first information, where the first information includes at least one of the following: a first remaining duration for which transmission is performed in the first power mode within a first time period, a second remaining duration for which the transmission is not allowed in the first power mode within the first time period, and a third remaining duration for which scheduling of uplink sending is not allowed within the first time period; and the first information is obtained based on proportion information of transmission in the first power mode within the first time period.

Optionally, the first information is based on a high reference power level.

Optionally, the transceiver unit is further configured to send third indication information. The third indication information indicates a step size for adjusting the fourth power level, and/or a power headroom of a terminal device.

Optionally, the first indication information is carried in downlink control information or a medium access control control element.

Optionally, the first indication information further includes at least one of the following: an effective moment of the fourth power level indicated by the first indication information, an effective duration of the fourth power level indicated by the first indication information, and a start time and a duration of a timer, where the timer is configured to determine a time for performing data scheduling based on the first indication information.

When the communication apparatus is configured to implement the method in the second aspect or any one of the implementations of the second aspect, the transceiver unit is configured to send first indication information, where the first indication information indicates a power mode for data scheduling, or indicates a third power level; the power mode includes a first power mode or a second power mode, the first power mode corresponds to a first power level, the second power mode corresponds to a second power level, and the first power level is higher than the second power level; and the transceiver unit is further configured to receive a first signal, where the first signal is sent at a fourth power level, and the fourth power level is determined based on the first indication information.

Optionally, the transceiver unit is further configured to receive second indication information, where the second indication information indicates whether the first power mode is supported, or indicates a fifth power level; and the processing unit is configured to determine the first indication information based on the second indication information.

Optionally, the transceiver unit is further configured to receive first information, where the first information includes at least one of the following: a first remaining duration for which transmission is performed in the first power mode within a first time period, a second remaining duration for which the transmission is not allowed in the first power mode within the first time period, and a third remaining duration for which scheduling of uplink sending is not allowed within the first time period; and the first information is obtained based on proportion information of transmission in the first power mode within the first time period; and the processing unit is further configured to determine the first indication information based on the first information.

Optionally, the first information is based on a high reference power level.

Optionally, the transceiver unit is further configured to receive third indication information, where the third indication information indicates a step size for adjusting the fourth power level, and/or a power headroom of a terminal device; and the processing unit is further configured to determine the first indication information based on the third indication information.

Optionally, the first indication information is carried in downlink control information or a medium access control control element.

Optionally, the first indication information further includes at least one of the following: an effective moment of the fourth power level indicated by the first indication information, an effective duration of the fourth power level indicated by the first indication information, and a start time and a duration of a timer, where the timer is configured to determine a time for performing data scheduling based on the first indication information.

In another possible implementation, the communication apparatus in the foregoing third aspect to the fourth aspect includes a processor coupled to a memory. The processor is configured to cause the apparatus to perform a corresponding function in the foregoing power determining method. The memory is configured to be coupled to the processor, and stores a program (an instruction) and/or data that are necessary for the apparatus. Optionally, the communication apparatus may further include a communication interface for implementing communication between the apparatus and another network element. Optionally, the memory may be located inside the communication apparatus, or may be located outside the communication apparatus.

In still another possible implementation, the communication apparatus in the foregoing third aspect to the fourth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method through a logical circuit or by executing code instructions. The transceiver apparatus may be a transceiver, a transceiver circuit, or an input/output interface, and is configured to receive a signal from a communication apparatus other than the communication apparatus and transmit the signal to the processor, or transmit a signal from the processor to a communication apparatus other than the communication apparatus. When the communication apparatus is a chip, the transceiver apparatus is a transceiver circuit or an input/output interface.

When the communication apparatus in the foregoing third aspect to the fourth aspect is a chip, a sending unit may be an output unit, such as an output circuit or a communication interface; and a receiving unit may be an input unit, such as an input circuit or a communication interface. When the communication apparatus is a terminal, a sending unit may be a transmitter or a sender; and a receiving unit may be a receiver or a receiving set.

According to a fifth aspect, a computer-readable storage medium is provided. The computer-readable storage medium stores a computer program or instructions. When the computer program or the instructions are executed, the methods according to the foregoing aspects are implemented.

According to a sixth aspect, a computer program product including instructions is provided. When the instructions are executed on a communication apparatus, the communication apparatus is caused to perform the methods according to the foregoing aspects.

According to a seventh aspect, a communication system is provided. The communication system includes the communication apparatus according to the third aspect and the communication apparatus according to the fourth aspect.

### BRIEF DESCRIPTION OF DRAWINGS

FIG. 1 is a simplified diagram of a wireless communication system according to an embodiment of this application;
FIG. 2a to FIG. 2c are diagrams of application scenarios of a satellite-terrestrial integrated network;
FIG. 3 is a schematic flowchart of a power determining method according to an embodiment of this application;
FIG. 4 is a schematic flowchart of another power determining method according to an embodiment of this application;
FIG. 5 is a diagram of an example of data scheduling according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

Embodiments of this application are described below with reference to the drawings in embodiments of this application.

The technology provided in this application may be applied to various communication systems. For example, the communication system may be a fourth generation (4^{th} generation, 4G) communication system (for example, a long term evolution (long term evolution, LTE) system), a fifth generation (5^{th} generation, 5G) communication system, a worldwide interoperability for microwave access (worldwide interoperability for microwave access, WiMAX) system, a wireless local area network (wireless local area network, WLAN) system, a system integrating a plurality of systems, or a future communication system. The 5G communication system may be further referred to as a new radio (new radio, NR) system.

A network element in the communication system may send a signal to another network element or receive a signal from another network element. The signal may include information, signaling, data, or the like. The network element may alternatively be replaced with an entity, a network entity, a device, a terminal device, a communication module, a node, a communication node, or the like. In this application, the network element is used as an example for description. For example, the communication system may include at least one terminal device and at least one access network device. The access network device may send a downlink signal to the terminal device, and/or the terminal device may send an uplink signal to the access network device. In addition, it may be understood that, if the communication system includes a plurality of terminal devices, the plurality of terminal devices may send signals to each other. In other words, both a signal sending network element and a signal receiving network element may be terminal devices.

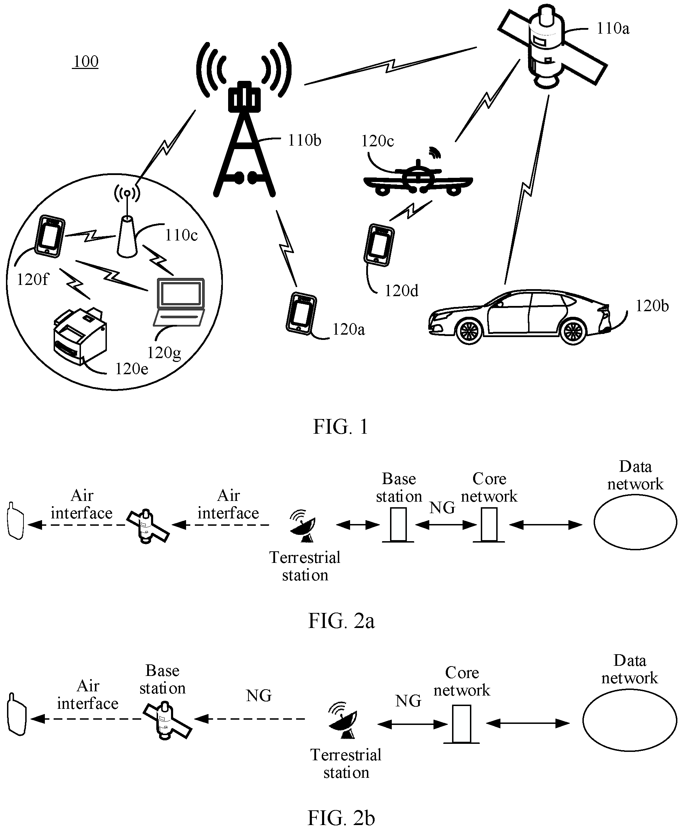

The power determining method provided in embodiments of this application may be applied to a wireless communication system such as 5G or satellite communication. FIG. 1 is a simplified diagram of a wireless communication system according to an embodiment of this application. As shown in FIG. 1, the wireless communication system includes a radio access network (radio access network, RAN) 100. The radio access network 100 may be a next-generation (for example, a later version in the future) radio access network, or a conventional (for example, 5G or 4G) radio access network. One or more terminal devices (120a to 120g, which are collectively referred to as 120) may be connected to each other, or connected to one or more network devices (110a to 110c, which are collectively referred to as 110) in the radio access network 100. A connection manner may be wired or wireless. Optionally, FIG. 1 is merely a diagram. The wireless communication system may further include another device, for example, may further include a core network device, a wireless relay device, and/or a wireless backhaul device, which are/is not shown in FIG. 1.

Optionally, in actual application, the wireless communication system may simultaneously include a plurality of network devices (also referred to as access network devices), or may simultaneously include a plurality of terminal devices. One network device may simultaneously serve one or more terminal devices. One terminal device may also simultaneously access one or more network devices. Quantities of terminal devices and network devices included in the wireless communication system are not limited in embodiments of this application.

The network device may be an entity configured to transmit or receive a signal on a network side. The network device may be an access device through which the terminal device accesses the wireless communication system in a wireless manner. For example, the network device may be a base station. The base station may cover the following names in a broad sense, or may be replaced with the following name, for example: a RAN node, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmission reception point (transmission reception point, TRP), a transmission point (transmission point, TP), a master eNB (master eNB, MeNB), a secondary eNB (secondary eNB, SeNB), a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a CU control plane (CU control plane, CU-CP) node, a CU user plane (CU user plane, CU-UP) node, or a positioning node. The base station may be a macro base station, a micro base station, a relay node, a donor node, or the like, or a combination thereof. The network device may alternatively be a communication module, a modem, or a chip disposed in the foregoing device or apparatus. The network device may alternatively be a mobile switching center, a device that undertakes a function of a base station in device-to-device (device-to-device, D2D) communication, vehicle-to-everything (vehicle-to-everything, V2X) communication, and machine-to-machine (machine-to-machine, M2M) communication, a device that undertakes a function of a base station in a future communication system, or the like. The network device may support networks using a same access technology or different access technologies. Embodiments of this application impose no limitation on a specific technology and a specific device form used by the network device.

The network device may be fixed, or may be mobile. For example, base stations 110b and 110c are stationary, and are responsible for wireless transmission and reception in one or more cells from the terminal device 120. A helicopter or an uncrewed aerial vehicle 120c shown in FIG. 1 may be configured to serve as a mobile base station, and one or more cells may move based on a position of the mobile base station 120c. In another example, the helicopter or the uncrewed aerial vehicle (120c) may be configured to serve as a terminal device that communicates with a satellite base station 110a.

In this application, a communication apparatus configured to implement functions of the access network may be an access network device, or may be a network device having some functions of the access network, or may be an apparatus that can support implementation of the functions of the access network, for example, a chip system, a hardware circuit, a software module, or a combination of a hardware circuit and a software module. The apparatus may be installed in the access network device or used in combination with the access network device. In the method in this application, an example in which the communication apparatus configured to implement the functions of the access network device is the access network device is used for description.

The terminal device may be an entity, such as a mobile phone, configured to receive or transmit a signal on a user side. The terminal device may be configured to connect to a person, an object, and a machine. The terminal device may communicate with one or more core networks through the network device. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. The terminal device 120 may be widely used in various scenarios, for example, cellular communication, D2D, V2X, point-to-point (point-to-point, P2P), machine-to-machine (machine-to-machine, M2M), machine type communication (machine type communication, MTC), the internet of things (internet of things, IoT), virtual reality (virtual reality, VR), augmented reality (augmented reality, AR), industrial control, autonomous driving, telemedicine, smart grid, smart furniture, smart office, smart wearable, smart transportation, smart city, an uncrewed aerial vehicle, a robot, remote sensing, passive sensing, positioning, navigation and tracking, and autonomous delivery and mobility. Some examples of the terminal device 120 are a 3GPP standard user equipment (user equipment, UE), a fixed device, a mobile device, a handheld device, a wearable device, a cellular phone, a smartphone, a session initiation protocol (session initiated protocol, SIP) phone, a notebook computer, a personal computer, a smart book, a vehicle, a satellite, a global positioning system (global positioning system, GPS) device, a target tracking device, an uncrewed aerial vehicle, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device such as a smartwatch, a VR device, an AR device, a wireless terminal in industrial control (industrial control), a terminal in an internet of vehicles system, a wireless terminal in self-driving (self-driving), a wireless terminal in smart grid (smart grid), a wireless terminal in transportation safety (transportation safety), a wireless terminal such as a smart fueler in smart city (smart city), a terminal device on a high-speed railway, and a wireless terminal such as a smart speaker, a smart coffee machine, or a smart printer in smart home (smart home). The terminal device 120 may be a wireless device in the foregoing various scenarios or an apparatus disposed in the wireless device, for example, a communication module, a modem, or a chip in the foregoing device. The terminal device may also be referred to as a terminal, a terminal device, a user equipment (user equipment, UE), a mobile station (mobile station, MS), a mobile terminal (mobile terminal, MT), or the like. The terminal device may alternatively be a terminal device in a future wireless communication system. The terminal device may be used in a dedicated network device or a general-purpose device. Embodiments of this application impose no limitation on a specific technology and a specific device form used by the terminal device.

Optionally, the terminal device may be configured to serve as a base station. For example, the UE may serve as a scheduling entity that provides sidelink signals between UEs in V2X, D2D, or P2P. As shown in FIG. 1, a cellular phone 120a and a car 120b communicate with each other through sidelink signals. The cellular phone 120a communicates with a smart home device 120e without relaying a communication signal through the base station 110b.

In this application, a communication apparatus configured to implement functions of the terminal device may be a terminal device, or may be a terminal device having some functions of the terminal device, or may be an apparatus that can support implementation of the functions of the terminal device, for example, a chip system. The apparatus may be installed in the terminal device or used in combination with the terminal device. In this application, the chip system may include a chip, or may include the chip and another discrete device. In the technical solutions provided in this application, an example in which the communication apparatus is the terminal device or the UE is used for description.

Optionally, the wireless communication system usually includes a cell, the base station provides management of the cell, and the base station provides a communication service for a plurality of mobile stations (mobile station, MS) in the cell. The base station includes a baseband unit (baseband unit, BBU) and a remote radio unit (remote radio unit, RRU). The BBU and the RRU may be placed in different places. For example, the RRU is remotely placed in a heavy-traffic area, while the BBU is placed in a central equipment room. The BBU and the RRU may alternatively be placed in a same equipment room. The BBU and the RRU may alternatively be different components at a same rack. Optionally, one cell may correspond to one carrier or component carrier.

In some deployments, the network device mentioned in embodiments of this application may be a device including a CU, or a DU, or a device including the CU and the DU, or a device including a CU-CP, a CU-UP, and DU nodes. For example, the network device may include a gNB-CU-CP, a gNB-CU-UP, and a gNB-DU.

In some deployments, a plurality of RAN nodes cooperatively assist the terminal in implementing radio access, and different RAN nodes separately implement some functions of the base station. For example, the RAN node may be a CU, a DU, a CU-CP, a CU-UP, or an RU. The CU and the DU may be separately disposed, or may be included in a same network element, for example, in a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another interface, compared with the CPRI, the fronthaul interface moves some downlink and/or uplink baseband functions, for example, moves one or more of precoding (precoding), digital beamforming (beamforming, BF), or inverse fast Fourier transform (inverse fast Fourier transform, IFFT)/addition of a cyclic prefix (cyclic prefix, CP) for downlink from the DU to the RU for implementation, and moves one or more of digital beamforming (beamforming, BF), or fast Fourier transform (fast Fourier transform, FFT)/removal of the CP for uplink from the DU to the RU for implementation. In a possible implementation, the interface may be an enhanced common public radio interface (enhanced common public radio interface, eCPRI). In an eCPRI architecture, segmentation manners of the DU and the RU are different, and correspond to different categories (category, Cat) of eCPRIs, such as eCPRI Cat A, B, C, D, E, and F.

The eCPRI Cat A is used as an example. For downlink transmission, segmentation is performed through layer mapping. The DU is configured to implement the layer mapping and one or more functions before the layer mapping (that is, one or more of encoding, rate matching, scrambling, modulation, and the layer mapping), and other functions after the layer mapping (for example, one or more of RE mapping, digital beamforming (beamforming, BF), or inverse fast Fourier transform (inverse fast Fourier transform, IFFT)/addition of a cyclic prefix (cyclic prefix, CP)) are moved to the RU for implementation. For uplink transmission, segmentation is performed through de-RE mapping. The DU is configured to implement the de-mapping and one or more functions before the de-mapping (that is, one or more functions of decoding, de-rate matching, descrambling, demodulation, inverse discrete Fourier transform (inverse discrete Fourier transform, IDFT), channel equalization, and the de-RE mapping), and other functions after the de-mapping (for example, one or more of digital BF or FFT/removal of the CP) are moved to the RU for implementation. It may be understood that, for function descriptions of DUs and RUs corresponding to various categories of eCPRIs, refer to an eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by a software module, a hardware module, or a combination of a software module and a hardware module.

In embodiments of this application, an apparatus configured to implement a function of the network device may be a network device, or may be an apparatus that can support the network device in implementing the function, for example, a chip system, a hardware circuit, a software module, or a combination of a hardware circuit and a software module. The apparatus may be installed in the network device or used in combination with the network device. In embodiments of this application, an example in which the apparatus configured to implement the function of the network device is the network device is merely used for description, and constitutes no limitation on the solutions in embodiments of this application.

It may be understood that, this application may be applied between the network device and the terminal device.

Communication between the network device and the terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the network device and the terminal device may further include an artificial intelligence (artificial intelligence, AI) layer, used to transmit data related to an AI function.

Data transmission between the network device and the terminal device is used as an example. Data transmission needs to pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. A data transmission direction includes sending or receiving, and each layer is further divided into a sending part and a receiving part. Downlink data transmission is used as an example. After obtaining data from an upper layer, the PDCP layer transmits the data to the RLC layer and the MAC layer, then the MAC layer generates a transport block, and then wireless transmission is performed through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used to provide a service for an application program installed in the terminal device. For example, downlink data received by the terminal device may be successively transmitted from the physical layer to the application layer, and then is provided by the application layer to the application. For another example, the application layer may obtain data generated by the application, successively transmit the data to the physical layer, and send the data to another communication apparatus. The non-access stratum may be used to forward user data, for example, forward uplink data received from the application layer to the SDAP layer, or forward downlink data received from the SDAP layer to the application layer.

It should be understood that quantities and types of devices in the communication system shown in FIG. 1 are merely used as an example. This application is not limited thereto. In actual application, the communication system may further include more terminal devices and more access network devices, and may further include another network element, for example, may include a core network device and/or a network element configured to implement an artificial intelligence function.

It may be understood that all or some functions implemented by one or more of the terminal device, the access network device, the core network device, or the network element configured to implement the artificial intelligence function may be virtualized, that is, implemented by one or more of a dedicated processor or a general-purpose processor and a corresponding software module. Because the terminal device and the access network device are related to an air interface transmission interface, receiving and sending functions of the interface may be implemented by hardware. The core network device such as an operation, administration, and maintenance (operation, administration, and maintenance, OAM) network element may be virtualized. Optionally, one or more functions of a virtualized terminal device, access network device, core network device, or network element configured to implement the artificial intelligence function may be implemented by a cloud device, for example, implemented by a cloud device in an over-the-top (over-the-top, OTT) system.

Compared with terrestrial communication, satellite communication has unique advantages. For example, the satellite communication can provide wider coverage, and satellite base stations are less vulnerable to damage from natural disasters or external forces. If satellite communication is introduced into future 5G communication, the satellite communication can provide communication services for areas such as oceans and forests that cannot be covered by some terrestrial communication networks; enhance reliability of the 5G communication, for example, provide better communication services for users on transportation means such as airplanes and trains; and provide more data transmission resources for the 5G communication, to increase a network rate. Therefore, simultaneous support for terrestrial communication and satellite communication is an inevitable trend of the future 5G communication, offering significant benefits in terms of wide coverage, reliability, multi-connection, high throughput, and the like.

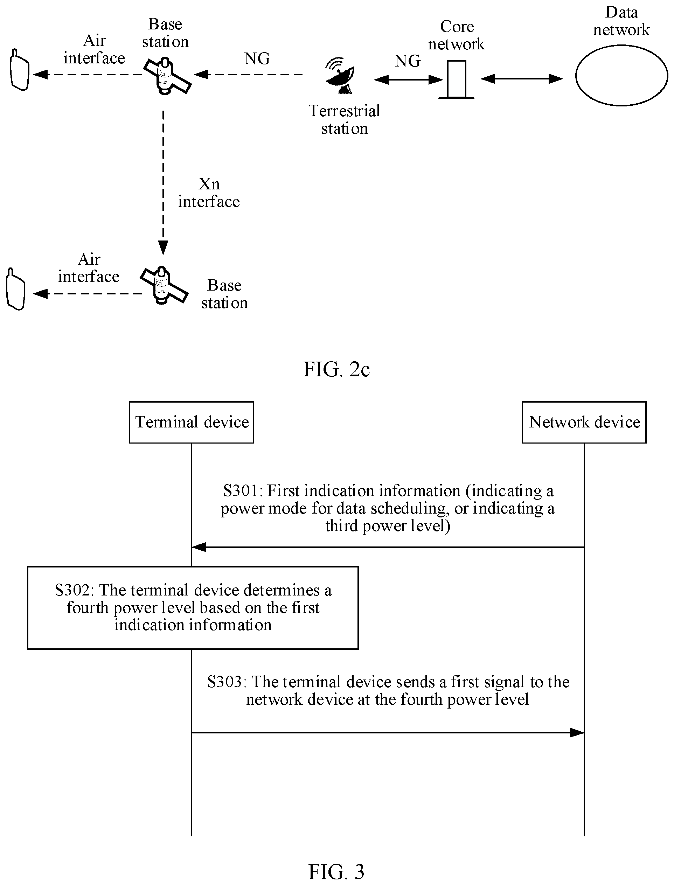

FIG. 2a to FIG. 2c are diagrams of application scenarios of a satellite-terrestrial integrated network. A terrestrial terminal device may access a network through an air interface (the air interface may be various types of air interfaces, for example, a 5G air interface). In FIG. 2a, a base station may be deployed on the ground and connected to a terrestrial station that communicates with a satellite. In FIG. 2b, the base station may be deployed on the satellite. The satellite is connected to the terrestrial station through a radio link. The terrestrial station and the terrestrial base station are connected to a core network in a wired or wireless manner. A wireless link may exist between satellites. If the satellite only has a transparent forwarding function (that is, a corresponding base station is deployed on the ground), only the transparent forwarding is implemented between the satellites. If the base station or some functions of the base station are deployed on a satellite, signaling interaction and user data transmission between base stations may be completed between satellites, as shown in FIG. 2c.

As a communication scenario of 5G communication, satellite communication is referred to as a non-terrestrial network (non-terrestrial network, NTN), which not only can support various 5G terminal devices G, but also can support IoT terminal devices.

Because satellite base stations are located over long distances and move quickly, the terrestrial terminal device needs to communicate with the satellite base stations in a high-power mode, to improve reliability of communication.

However, communication of the terminal device needs to meet a requirement for an SAR, that is, a requirement for radiation to a human body. Currently, a strict procedure has been specified to ensure that high-power uplink sending of the terminal device does not exceed a specified proportion. For the terminal device that performs communication in a high-power mode, power backoff also needs to be followed, that is, when a condition is not met, only a default 23 dBm power can be used for sending. For example, a network device may be configured with a maximum transmit power, and conditions such as whether a proportion of uplink sending exceeds a threshold within a current configuration period all constrain the transmit power of the terminal device.

Currently, high power levels supported by the terminal device are defined on a TDD frequency band, as shown in Table 1:

**Table 1**

| NR bandwidth | Class 1 (dBm) | Tolerance (dB) | Class 1.5 (dBm) | Tolerance (dB) | Class 2 (dBm) | Tolerance (dB) | Class 3 (dBm) | Tolerance (dB) |
|---|---|---|---|---|---|---|---|---|
| n1 | | | | | 26 | +2/-3 | 23 | ± 2 |
| n2 | | | | | | | 23 | ± 2³ |
| n3 | | | | | 26 | +2/-3³ | 23 | ± 2³ |
| n5 | | | | | | | 23 | ± 2 |
| n7 | | | | | | | 23 | ± 2³ |
| n8 | | | | | | | 23 | ± 2³ |
| n12 | | | | | | | 23 | ± 2³ |
| n13 | | | | | | | 23 | ± 2 |
| n14 | 31⁶ | +2/-3 | | | | | 23 | ± 2 |
| n18 | | | | | | | 23 | ± 2 |
| n20 | | | | | | | 23 | ± 2³ |
| n24 | | | | | | | 23 | +2/-3³ |
| n25 | | | | | | | 23 | ± 2³ |
| n26 | | | | | | | 23 | ± 2³ |
| n28 | | | | | | | 23 | +2/-2.5 |
| n30 | | | | | | | 23 | ± 2 |
| n34 | | | 29⁵ | +2/-3 | 26 | +2/-3 | 23 | ± 2 |
| n38 | | | | | | | 23 | ± 2 |
| n39 | | | | | 26 | +2/-3 | 23 | ± 2 |
| n40 | | | 29⁵ | +2/-3 | 26 | +2/-3 | 23 | ± 2 |
| n41 | | | 29⁵ | + 2/- 3³ | 26 | +2/-3³ | 23 | ± 2³ |
| ... | ... | ... | ... | ... | ... | | | |

As shown in Table 1, the high power level (a transmit power higher than 23 dBm) supported by the terminal device is defined on the TDD frequency band, but a high power level supported by the terminal device that performs communication on an FDD frequency band is not specified. In TDD, uplink sending and downlink sending share a same frequency band, but are separated in time. In FDD, because the uplink sending and the downlink sending use different frequency bands, the uplink sending and the downlink sending can occur simultaneously. TDD-based power adjustment is based on a TDD configuration, that is TDD refers to periodically configuring the first 5 ms as uplink sending and the last 5 ms as downlink reception according to a specified period (for example, 10 ms). Due to periodicity of a TDD frame structure, the uplink sending occupies 50% of each period. If a requirement for the SAR is that the terminal device can perform sending at a high power of 26 dBm when the uplink proportion does not exceed 50% in 50% of the period, provided that the network device defines the ratio, the terminal device can meet the requirement for the SAR by performing uplink sending at 26 dBm. During FDD communication, because the terminal device can continuously perform the uplink sending, using a TDD decision-making manner may result in an overly conservative sending power of the terminal device. For example, if an observation period of the SAR is 6 minutes, the terminal device may continuously perform uplink sending for 3 minutes and perform downlink receiving for 3 minutes. If the TDD manner is used, the terminal device can only perform uplink sending with a proportion of 50% or less every 10 ms. Therefore, the network device does not plan data sending over a long period of time, but schedules current data sending based on current services.

In conclusion, how to flexibly determine a sending power of the terminal device is a problem that needs to be resolved currently.

Therefore, this application provides a power determining method. A network device may send an indication to a terminal device, where the indication indicates a power mode or a power level for data scheduling, so that the terminal device can determine the power level based on the indication and perform communication. Therefore, the terminal device can flexibly determine the sending power.

As shown in FIG. 3, FIG. 3 is a schematic flowchart of a power determining method according to an embodiment of this application. For example, the method may include the following steps.

S301: A network device sends first indication information to a terminal device. Correspondingly, the terminal device receives the first indication information.

In this embodiment, when scheduling the terminal device to perform uplink transmission, the network device may indicate a power mode or a power level for data scheduling. For example, the network device sends the first indication information to the terminal device, where the first indication information indicates a power mode for data scheduling, or indicates a third power level. The power mode includes a first power mode or a second power mode. The first power mode corresponds to a first power level, and the second power mode corresponds to a second power level. The first power level is higher than the second power level. The second power level may also be referred to as a default power level. For example, a power corresponding to the second power level is 23 dBm. To be specific, the network device may schedule the terminal device to perform high-power sending, or schedule the terminal device to perform sending based on the default power level. During scheduling, a power mode may be indicated, or a specific power level may be indicated.

In an example, the first indication information may be carried in downlink control information (downlink control information, DCI). The DCI is physical layer information, so that the network device can dynamically indicate the power mode or the power level of the terminal device for communication.

In another example, the first indication information may alternatively be carried in a medium access control control element (medium access control control element, MAC CE). The MAC CE is MAC layer information. The first indication information is carried in the MAC CE, to reduce impact on a DCI format.

S302: The terminal device determines a fourth power level based on the first indication information.

After receiving the first indication information, the terminal device determines the fourth power level based on the first indication information.

In an example, the first indication information indicates the power mode for data scheduling.

For example, the first indication information indicates that the power mode for data scheduling is the first power mode. A power of the first power level corresponding to the first power mode may be pre-agreed on between the network device and the terminal device, or may be predefined in a protocol, or may be preconfigured by the network device, for example, the power of the first power level is 26 dBm. In this case, after receiving the first indication information, the terminal device may determine that a power corresponding to the fourth power level is 26 dBm. For another example, the power mode is the first power mode. A power of the first power level corresponding to the first power mode may be pre-agreed on between the network device and the terminal device, or may be predefined in a protocol, or may be preconfigured by the network device, for example, the power of the first power level is greater than or equal to 26 dBm. In this case, after receiving the first indication information, the terminal device may determine, based on a status of the terminal device, that a power corresponding to the fourth power level is 29 dBm.

For example, the first indication information indicates that the power mode for data scheduling is the second power mode. The second power level corresponding to the second power mode is default, that is, is pre-agreed on between the network device and the terminal device, or predefined in a protocol, or preconfigured by the network device. In this case, after receiving the first indication information, the terminal device may determine that a power corresponding to the fourth power level is 23 dBm.

In another example, the first indication information indicates the third power level, and the terminal device may determine, based on the first indication information, to use the third power level indicated by the network device as the fourth power level, that is, the fourth power level is the same as the third power level. Alternatively, after receiving the third power level indicated by the network device, the terminal device may determine the fourth power level based on the status of the terminal device. For example, the fourth power level is higher than the third power level, or the fourth power level is lower than the third power level.

S303: The terminal device sends a first signal to the network device at the fourth power level. Correspondingly, the network device receives the first signal sent by the terminal device at the fourth power level.

After determining the fourth power level, the terminal device sends the first signal to the network device at the fourth power level. The first signal may be an uplink channel or signal, for example, a physical uplink shared channel (physical uplink shared channel, PUSCH), a physical uplink control channel (physical uplink control channel, PUCCH), or a sounding reference signal (sounding reference signal, SRS).

Therefore, the terminal device can flexibly determine a sending power based on an indication of the network device.

According to the power determining method provided in this embodiment of this application, the network device may send the indication to the terminal device, where the indication indicates a power mode or a power level for data scheduling, so that the terminal device can determine the power level based on the indication and perform communication. Therefore, the terminal device can flexibly determine the sending power.

The foregoing embodiment describes that the terminal device can flexibly determine the sending power based on the indication of the network device. The following embodiment further describes how the network device determines the sending power of the terminal device.

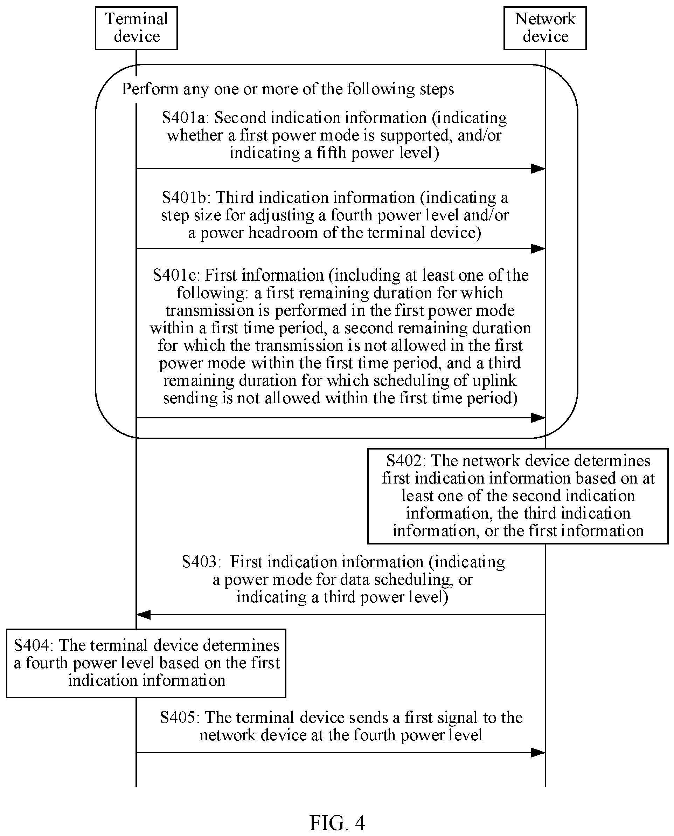

FIG. 4 is a schematic flowchart of another power determining method according to an embodiment of this application. For example, the method may include the following steps.

S401a: A terminal device sends second indication information to a network device. Correspondingly, the network device receives the second indication information.

When the terminal device accesses a network or after the terminal device accesses the network, the terminal device may report, to the network device, whether a first power mode is supported, and/or a supported highest power level. For example, the terminal device sends the second indication information to the network device, where the second indication information indicates whether the first power mode is supported, and/or indicates a fifth power level. The first power mode corresponds to a first power level. The fifth power level is the highest power level supported by the terminal device.

The terminal device reports the capability, to avoid a scheduling failure caused because the network device unilaterally schedules the terminal device to perform sending at a high power, but the terminal device does not support high-power sending; or to avoid reduction of communication efficiency and reliability caused because the network device unilaterally schedules the terminal device to perform sending in a default mode, but the terminal device can actually support the high-power sending.

S401b: The terminal device sends third indication information to the network device. Correspondingly, the network device receives the third indication information. The third indication information indicates a step size for adjusting a power level (that is, a fourth power level) indicated when the network device schedules data transmission. For example, the terminal device may report a step size that can be used by the terminal device currently for power adjustment. For example, the terminal device may adjust a sending power level based on step sizes of 1 dB, 2 dB, and 3 dB.

Alternatively, the third indication information may further include a power headroom of the terminal device. The power headroom of the terminal device is a difference between a power of a signal currently sent by the terminal device and a maximum sending power configured by the network device.

S401c: The terminal device sends first information to the network device. Correspondingly, the network device receives the first information.

The network device may schedule the terminal device to perform high-power sending. However, the network device may not continuously schedule the terminal device to perform high-power sending. Furthermore, the network device does not accurately count how long the terminal device has performed high-power sending within a time period.

In this embodiment, the terminal device can accurately count how long a channel or a signal is sent in the first power mode within a first time period, to obtain, based on proportion information of transmission in the first power mode within the first time period: a first remaining duration for which the transmission can still be performed in the first power mode within the first time period, a second remaining duration for which the transmission is not allowed in the first power mode within the first time period, or a third remaining duration for which scheduling of uplink sending is not allowed within the first time period.

Therefore, the terminal device may send the first information to the network device. The first information includes at least one of the following: the first remaining duration for which the transmission is performed in the first power mode within the first time period, the second remaining duration for which the transmission is not allowed in the first power mode within the first time period, and the third remaining duration for which the scheduling of uplink sending is not allowed within the first time period. The first information is obtained based on the proportion information of the transmission in the first power mode within the first time period.

For example, a start point, a duration, and an end point of the first time period may be configured by the network device. For example, the start point of the first time period may be a moment when the terminal device receives first data scheduling. Before receiving the first data scheduling, the terminal device may perform sending in a default power mode. For another example, the start point of the first time period may be a moment after the terminal device completes a random access process, or a moment when the terminal device initiates random access.

It may be understood that the foregoing first information obtained by the terminal device meets a requirement for an SAR. Therefore, the terminal device reports the first information, so that high-power sending of the terminal device can meet a regulatory requirement.

It may be understood that the first information may be periodically sent by the terminal device to the network device, or may be sent each time after data scheduling is received from the network device, or may be sent as requested by the network device, or may be sent when an accumulated time for performing sending at a high power level by the terminal device within the first time period reaches a threshold, or the like. This is not limited in this application. Therefore, a sequence of performing step S401c and subsequent steps is not limited in this embodiment.

It may be understood that, during implementation, one or more of steps S401a, S401b, and S401c may be performed.

S402: The network device determines first indication information based on at least one of the second indication information, the third indication information, or the first information.

In step S401a, the terminal device sends the second indication information to the network device. After receiving the second indication information, the network device may learn of whether the terminal device supports high-power sending, and/or a supported highest power level. Therefore, when scheduling the terminal device to perform uplink transmission, the network device may determine, based on the second indication information, a power mode or a power level for data scheduling of the terminal device. If the second indication information indicates that the terminal device supports the first power mode, the network device may determine that the power mode for data scheduling is the first power mode. If the second indication information indicates that the terminal device does not support the first power mode, the network device may determine that the power mode for data scheduling is the second power mode. If the second indication information indicates the fifth power level, the network device may determine a third power level based on the highest power level and a resource situation of the network device. The third power level may be less than or equal to the fifth power level. Therefore, the network device may determine the first indication information, where the first indication information indicates a power mode for data scheduling, or indicates the third power level.

In step S401b, the terminal device sends the third indication information to the network device. The third indication information indicates a step size for adjusting a power level (that is, the fourth power level) indicated by the network device. After receiving the third indication information, the network device may determine a granularity of adjustment and an amount of adjustment based on a capability of the terminal device, that is, adjust the step size of the power level for data scheduling based on the third indication information. The network device may determine the power mode or the power level for data scheduling based on the third indication information, to determine the first indication information. In this manner, operations of adjusting the power level by the terminal device and the network device can be consistent, thereby improving reliability of data scheduling.

Alternatively, the third indication information may further include a power headroom of the terminal device. After receiving the power headroom reported by the terminal device, the network device may determine whether the power level of the terminal device can be further improved during next data scheduling. When determining the power mode or the power level for data scheduling, the network device considers, with reference to the power headroom of the terminal device, whether to change the power mode of the terminal device or increase or decrease the power level of the terminal device, to determine the first indication information.

In step S401c, after receiving the first information, the network device may perform data scheduling based on the first information, that is, determine the power mode or the power level for data scheduling of the terminal device based on the first remaining duration for which the transmission can still be performed in the first power mode within the first time period, the second remaining duration for which the transmission is not allowed in the first power mode within the first time period, or the third remaining duration for which scheduling of uplink sending is not allowed within the first time period, to determine the first indication information.

For example, the foregoing first information is based on a high reference power level. In other words, the terminal device obtains the foregoing first information based on the high reference power level. For example, the first remaining duration for which the transmission can still be performed in the first power mode within the first time period is calculated based on the high reference power level, the second remaining duration for which the transmission is not allowed in the first power mode within the first time period is calculated based on the high reference power level, or the third remaining duration for which the scheduling of uplink sending is not allowed within the first time period is calculated based on the high reference power level. After receiving the first information, the network device may directly perform data scheduling based on the first information; or may convert the first information into a power of another level for scheduling. For example, the first remaining duration is calculated based on the high reference power level (for example, 26 dBm), and the terminal device reports that a first remaining duration for which the transmission can still be performed in the high reference power level within 10 minutes is 2 minutes, uplink sending cannot be performed in the remaining time, indicating that a remaining duration for which the transmission can still be performed by the terminal device at 29 dBm within 10 minutes is 1 minute. The high reference power level is introduced as a normalization parameter for reporting and indication, so that signaling indications can be unified to some extent, and signaling overheads can be reduced.

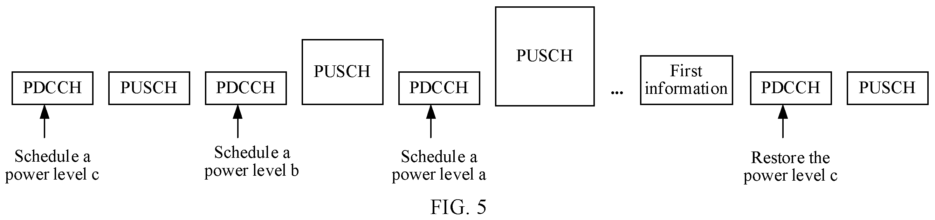

FIG. 5 is a diagram of an example of data scheduling according to an embodiment of this application. A network device sends DCI on a physical downlink control channel (physical downlink control channel, PDCCH), to schedule a terminal device to perform uplink sending at a power level. For example, the network device schedules, at a first moment, the terminal device to perform uplink sending at a power level c. The network device schedules, at a second moment, the terminal device to perform uplink sending at a power level b. The network device schedules, at a third moment, the terminal device to perform uplink sending at a power level a. For example, power level a > power level b > power level c. For example, the power level a is 29 dBm, the power level b is 26 dBm, and the power level c is 23 dBm. It may be understood that a higher power level used by the terminal device indicates a larger amount of data that can be transmitted. The terminal device obtains the foregoing first information, and reports the first information to the network device. After receiving the first information, for example, learning of the first remaining duration for which the terminal device performs transmission in the first power mode within the first time period, the network device may restore scheduling the terminal device to perform the uplink sending at the power level c.

In addition, a data transmission resource and a transmission manner (for example, a quantity of repetitions) allocated by the network device vary with the indicated power mode or power level for data scheduling, to avoid a waste of resources and improve utilization of the resources.

For example, if a current transmission mode for data scheduling is the foregoing first power mode, the network device expects the terminal device to send an uplink channel or signal in a high-power mode, and correspondingly, the scheduled resources and the quantity of repetitions decrease.

For another example, if the current transmission mode for data scheduling is the second power mode, the network device configures the scheduled resources and the quantity of repetitions based on a normal default mode.

S403: The network device sends the first indication information to the terminal device. Correspondingly, the terminal device receives the first indication information.

After determining the first indication information, the network device may send the first indication information to the terminal device when scheduling the terminal device to perform uplink transmission.

In an implementation, the first indication information may be carried in DCI.

For example, it is assumed that the DCI indicates the third power level. In this case, when a value of the DCI is "0", the terminal device sends an uplink channel or signal at a default level; or when the value of the DCI is "1", the terminal device sends an uplink channel or signal at a power level of 26 dBm; and so on. In this example, with respect to the second power level, the step size for adjusting the power level determined by the network device and the terminal device is 3 dBm.

The terminal device reports the capability of the terminal device, and the network device indicates a transmission mode for data scheduling of the terminal device through the DCI, to flexibly and accurately determine, each time data sending is scheduled, a power level at which the terminal device performs sending, thereby improving flexibility of power adjustment.

In another implementation, the first indication information may be carried in a MAC CE. The transmission mode for data scheduling is indicated by the MAC CE, to reduce impact on a DCI format.

The first power mode indicated by the MAC CE is valid within a period of time. Therefore, in this embodiment, the MAC CE further includes at least one of the following: an effective moment of the first power level, an effective duration of the first power level, and a start time and a duration of a timer, where data scheduling is performed based on the first power mode within the duration of the timer. This is a difference from the implementation in which the transmission mode for data scheduling is indicated by the DCI.

If the MAC CE includes the effective moment of the first power level indicated by the MAC CE, the first power level takes effect within a period of time starting from the effective moment. The effective duration of the first power level may be predefined in a protocol, or may be preconfigured by the network device through RRC signaling, or may be indicated by the terminal device.

If the MAC CE includes the effective duration of the first power level indicated by the MAC CE, the first power level takes effect within the effective duration since the terminal device receives the MAC CE.

If the MAC CE includes the start time and the duration of the timer, the timer may be started at the start time, and data scheduling is performed based on the first power mode within the duration of the timer. For example, the start time may be a time when the terminal device receives the MAC CE.

For example, the duration of the timer may alternatively be configured by the network device through RRC signaling, so that the duration configured through the RRC signaling is used before the RRC signaling is updated.

Furthermore, in this embodiment, the transmission mode for data scheduling is indicated in the MAC CE. If hybrid automatic repeat request (hybrid automatic repeat request, HARQ) feedback is disabled (that is, the terminal device does not need to feed back an acknowledgement (acknowledgement, ACK)/a negative acknowledgement (negative acknowledgement, NACK) when receiving the MAC CE), the terminal device starts the timer or starts to calculate the duration after a time of data decoding upon receiving of the MAC CE. If the HARQ feedback is enabled, the terminal device starts the timer or starts to calculate the duration after feeding back a decoding result of the MAC CE.

If the terminal device has not received the MAC CE before the timer expires, the terminal device may restore to a default sending power. If the terminal device receives a new indication from the MAC CE before the timer expires, the timer may be restarted, and time for high-power sending by the terminal device is prolonged.

S404: The terminal device determines a fourth power level based on the first indication information.

For a specific implementation of this step, refer to step S302 in the embodiment shown in FIG. 3. Details are not described herein again.

S405: The terminal device sends a first signal to the network device at the fourth power level. Correspondingly, the network device receives the first signal.

After determining the fourth power level, the terminal device sends the first signal to the network device at the fourth power level. The first signal may be an uplink channel or signal.

Therefore, the terminal device can flexibly determine the power mode or the power level based on an indication of the network device.

According to the power determining method provided in embodiments of this application, the terminal device reports the capability of the terminal device, and the network device indicates the power mode or the power level for data scheduling of the terminal device, so that the terminal device can flexibly and accurately determine the sending power.

The terminal device reports the first information, so that high-power sending of the terminal device can meet a regulatory requirement.

It may be understood that, in the foregoing embodiments, the methods and/or the steps implemented by the terminal device may also be implemented by a component (for example, a chip or a circuit) that can be used in the terminal device, and the methods and/or the steps implemented by the network device may also be implemented by a component (for example, a chip or a circuit) that can be used in the network device.

The foregoing mainly describes the solutions provided in embodiments of this application from a perspective of interaction between the terminal device and the network device. Correspondingly, an embodiment of this application further provides a communication apparatus. The communication apparatus is configured to implement the foregoing methods. The communication apparatus may be the terminal device in the foregoing method embodiments, or may be a component that may be used for the terminal device. Alternatively, the communication apparatus may be the network device in the foregoing method embodiment, or may be a component that may be used for the network device. It may be understood that, to implement the foregoing functions, the communication apparatus includes a hardware structure and/or a software module for performing a corresponding function. A person skilled in the art should easily be aware that the units and algorithm steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into function modules based on the foregoing method embodiments. For example, division into the function modules may be based on corresponding functions, or two or more functions may be integrated into one processing unit. The integrated module may be implemented in a form of hardware or may be implemented in a form of a software functional module. It should be noted that, division into the modules in embodiments of this application is an example, and is merely logical function division. During actual implementation, there may be another division manner.

Based on the same concept of the foregoing power determining method, this application further provides the following communication apparatus.

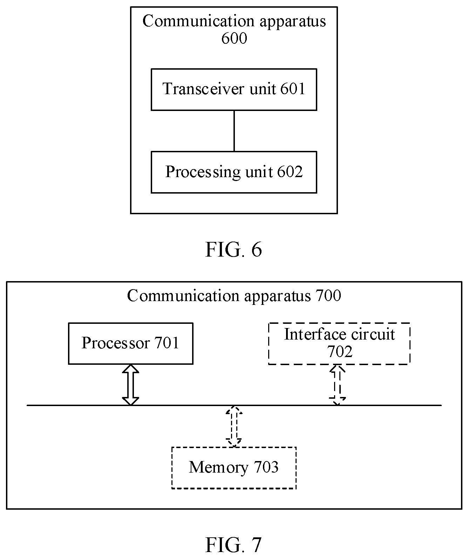

As shown in FIG. 6, FIG. 6 is a diagram of a structure of a communication apparatus according to an embodiment of this application. The communication apparatus 600 includes a transceiver unit 601 and a processing unit 602.

When the communication apparatus is configured to implement the functions of the terminal device in the foregoing method embodiments, the transceiver unit 601 is configured to perform the operations of the terminal device in steps S301 and S303 in the embodiment shown in FIG. 3, and the processing unit 602 is configured to perform step S302 in the embodiment shown in FIG. 3. Alternatively, the transceiver unit 601 is configured to perform the operations of the terminal device in steps S401a-S401b, S403, and S405 in the embodiment shown in FIG. 4, and the processing unit 602 is configured to perform step S404 in the embodiment shown in FIG. 4.

When the communication apparatus is configured to implement the functions of the network device in the foregoing method embodiments, the transceiver unit 601 is configured to perform the operations of the network device in steps S301 and S303 in the embodiment shown in FIG. 3. Alternatively, the transceiver unit 601 is configured to perform the operations of the network device in steps S401a-S401b, S403, and S405 in the embodiment shown in FIG. 4, and the processing unit 602 is configured to perform step S402 in the embodiment shown in FIG. 4.

For specific implementation of the transceiver unit 601 and the processing unit 602 above, reference may be made to descriptions in the foregoing method embodiments.

As shown in FIG. 7, FIG. 7 is a diagram of a structure of another communication apparatus according to an embodiment of this application. A communication apparatus 700 includes one or more processors 701 (one processor is shown in the figure). Optionally, the communication apparatus 700 may further include an interface circuit 702 (which is represented by a dashed line in the figure). The processor 701 and the interface circuit 702 are coupled to each other. It may be understood that, the interface circuit 702 may be a transceiver or an input/output interface. Optionally, the communication apparatus 700 may further include a memory 703 (which is represented by a dashed line in the figure). The memory 703 is configured to store instructions to be executed by the processor 701, store input data required for the processor 701 to run the instructions, or store data generated after the processor 701 runs the instructions.

When the communication apparatus is configured to implement the functions of the terminal device in the foregoing method embodiments, the interface circuit 702 is configured to perform the operations of the terminal device in steps S301 and S303 in the embodiment shown in FIG. 3, and the processor 701 is configured to perform step S302 in the embodiment shown in FIG. 3. Alternatively, the interface circuit 702 is configured to perform the operations of the terminal device in steps S401a-S401b, S403, and S405 in the embodiment shown in FIG. 4, and the processor 701 is configured to perform step S404 in the embodiment shown in FIG. 4.

When the communication apparatus is configured to implement the functions of the network device in the foregoing method embodiments, the interface circuit 702 is configured to perform the operations of the network device in steps S301 and S303 in the embodiment shown in FIG. 3. Alternatively, the interface circuit 702 is configured to perform the operations of the network device in steps S401a-S401b, S403, and S405 in the embodiment shown in FIG. 4, and the processor 701 is configured to perform step S402 in the embodiment shown in FIG. 4.

When the communication apparatus is a chip used in the terminal device, the chip implements the functions of the terminal device in the foregoing method embodiments. The chip receives information from another module (for example, a radio frequency module or an antenna) in the terminal device. The information is sent by the network device to the terminal device. Alternatively, the chip sends information to another module (for example, a radio frequency module or an antenna) in the terminal device. The information is sent by the terminal device to the network device.

When the foregoing communication apparatus is a chip used in the network device, the chip implements the function of the network device in the foregoing method embodiments. The chip receives information from another module (for example, a radio frequency module or an antenna) in the network device. The information is sent by the terminal device to the network device. Alternatively, the chip sends information to another module (for example, a radio frequency module or an antenna) in the network device. The information is sent by the network device to the terminal device.

In addition, it should be noted that, the foregoing transceiver unit and/or processing unit may be implemented through a virtual module. For example, the processing unit may be implemented through a software functional unit or a virtual apparatus, and the transceiver unit may be implemented through a software function or a virtual apparatus. Alternatively, the processing unit or the transceiver unit may be implemented through a physical apparatus. For example, if the apparatus is implemented through a chip/chip circuit, the transceiver unit may be an input/output circuit and/or a communication interface, to perform an input operation (corresponding to the foregoing receiving operation) and an output operation (corresponding to the foregoing sending operation). The processing unit is an integrated processor, a microprocessor, or an integrated circuit.

In this application, the module division is an example, and is merely logical function division, and additional division manners may exist during actual implementation. In addition, functional modules in examples of this application may be integrated into one processor, or may exist alone physically, or two or more modules may be integrated into one module. The integrated module may be implemented in a form of hardware or may be implemented in a form of a software functional module.

It may be understood that, the processor in this embodiment of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

An embodiment of this application further provides a computer-readable storage medium. The computer-readable storage medium stores a computer program or instructions. When the computer program or the instructions are executed, the methods in the foregoing embodiments are implemented.

An embodiment of this application further provides a computer program product including instructions. When the instructions are executed on a computer, the computer is caused to perform the methods in the foregoing embodiments.

An embodiment of this application further provides a communication system, including the foregoing communication apparatus.

An embodiment of this application further provides a circuit. The circuit is coupled to a memory. The circuit is configured to perform the methods in the foregoing embodiments. The circuit may include a chip circuit.

When the communication apparatus is a module used in a network device, the module in the network device implements a function of the network device in the foregoing method embodiments. The module in the network device receives information from another module (for example, a radio frequency module or an antenna) in the network device. The information is sent by the terminal device to the network device. Alternatively, the module in the network device sends information to another module (for example, a radio frequency module or an antenna) in the network device. The information is sent by the network device to the terminal device. The module in the network device herein may be a baseband chip in the network device, or may be a CU, a DU, or another module, or may be an apparatus in an O-RAN architecture, for example, an apparatus such as an open CU or an open DU.

It should be noted that, the foregoing units or one or more of the units may be implemented through software, hardware, or a combination thereof. When any one of the foregoing units or the units are implemented through software, the software exists in a form of computer program instructions and is stored in a memory, and the processor may be configured to execute the program instructions and implement the foregoing method process.

In this application, the processor may be a general-purpose processor, a digital signal processor, an application specific integrated circuit, a field programmable gate array or another programmable logic device, a discrete gate or a transistor logic device, a discrete hardware component, or all or some of the circuits configured to implement a processing function in the foregoing devices. The processor may implement or execute the methods, the steps, and the logical block diagrams disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

When the foregoing unit or the units are implemented through hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not rely on software to perform the foregoing method process.

Optionally, an embodiment of this application further provides a chip system, including at least one processor and an interface. The at least one processor is coupled to a memory through the interface. When the at least one processor runs a computer program or instructions in the memory, the chip system is caused to perform the method in any one of the foregoing method embodiments. Optionally, the chip system may include a chip, or may include a chip and another discrete device. This is not specifically limited in embodiments of this application.

Alternatively, the memory in this application may be a circuit or any other apparatus that can implement a storage function, and is configured to store program instructions and/or data. The memory is any other medium that can be configured to carry or store desired program code in the form of instructions or data structures and can be accessed by a computer, but is not limited thereto. For example, the memory may be a non-volatile memory such as a digital versatile disc (digital versatile disc, DVD), a hard disk drive (hard disk drive, HDD), or a solid-state drive (solid-state drive, SSD), or may be a volatile memory such as a random-access memory (random-access memory, RAM).

The terms "include", "have", and any variant thereof mentioned in the foregoing descriptions of this application are intended to cover a non-exclusive inclusion. For example, a process, a method, a system, a product, or a device that includes a series of steps or units is not limited to the listed steps or units, and instead, optionally further includes another step or unit that is not listed, or optionally further includes another step or unit that is intrinsic to the process, method, product, or device. It should be noted that, in this application, words such as "in an example" or "for example" represent giving an example, an illustration, or a description. Any method or design solution described as "in an example" or "for example" in this application should not be explained as being more preferred or having more advantages than another method or design solution. To be precise, use of the word such as "example" or "for example" is intended to present a relative concept in a specific manner.

It should be understood that, in the description of this application, unless otherwise stated, "/" indicates that associated objects are in an "or" relationship. For example, A/B may represent A or B, where A and B may be singular or plural. In addition, in the descriptions of this application, unless otherwise specified, "a plurality of" means two or more than two. "At least one of the following items (pieces) or a similar expression thereof" refers to any combination of these items, including any combination of singular items (pieces) or plural items (pieces). For example, at least one item (piece) of a, b, or c may represent a, b, c, a-b, a-c, b-c, or a-b-c, where a, b, and c may be singular or plural. In addition, to clearly describe the technical solutions in embodiments of this application, words such as "first" and "second" are used in embodiments of this application to distinguish between same items or similar items whose functions and effects are substantially the same. A person skilled in the art may understand that the terms such as "first" and "second" do not limit a quantity and an execution order, and the terms such as "first" and "second" are not limited to be unnecessarily different. In addition, in the embodiments of this application, the terms such as "exemplarily" or "for example" are used to represent giving an example, an illustration, or a description. Any embodiment or design solution described as an "example" or "for example" in embodiments of this application should not be explained as being more preferred or having more advantages than another embodiment or design solution. To be precise, use of the term such as "example" or "for example" is intended to present a related concept in a specific manner for ease of understanding.

All or some of the foregoing embodiments may be implemented through software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the processes or functions according to embodiments of this application are all or partially generated. The computer may be a general-purpose computer, a special-purpose computer, a computer network, or another programmable apparatus. The computer instructions may be stored in a computer-readable storage medium or transmitted from one computer-readable storage medium to another computer-readable storage medium. For example, the computer instructions may be transmitted from one website, computer, network device, or data center to another website, computer, network device, or data center in a wired (for example, a coaxial cable, an optical fiber, or a digital subscriber line (digital subscriber line, DSL)) or wireless (for example, infrared, wireless, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

In the foregoing embodiments, the descriptions of each embodiment have different focuses, and for a part that is not described in detail in an embodiment, reference may be made to the relevant description of another embodiment.

The components of the apparatus of embodiments of this application may be merged, divided, and deleted based on an actual need. A person skilled in the art may integrate or combine different embodiments in this specification and features of the different embodiments.

In this application, under the premise of no logical contradiction, examples may be mutually referenced. For example, methods and/or terms between method embodiments may be mutually referenced. For example, functions and/or terms between apparatus embodiments may be mutually referenced. For example, functions and/or terms between apparatus examples and method examples may be mutually referenced.

## Claims

1. A power determining method, wherein the method comprises:
receiving first indication information, wherein the first indication information indicates a power mode for data scheduling, or indicates a third power level, wherein
the power mode comprises a first power mode or a second power mode, the first power mode corresponds to a first power level, the second power mode corresponds to a second power level, and the first power level is higher than the second power level;
determining a fourth power level based on the first indication information; and
sending a first signal at the fourth power level.

2. The method according to claim 1, wherein the method further comprises:
sending second indication information, wherein the second indication information indicates whether the first power mode is supported, or indicates a fifth power level.

3. The method according to claim 1 or 2, wherein the method further comprises:
sending first information, wherein the first information comprises at least one of the following: a first remaining duration for which transmission is performed in the first power mode within a first time period, a second remaining duration for which the transmission is not allowed in the first power mode within the first time period, and a third remaining duration for which scheduling of uplink sending is not allowed within the first time period; and the first information is obtained based on proportion information of transmission in the first power mode within the first time period.

4. The method according to claim 3, wherein the first information is based on a high reference power level.

5. The method according to claim 1, wherein the method further comprises:
sending third indication information, wherein the third indication information indicates a step size for adjusting the fourth power level, and/or a power headroom of a terminal device.

6. The method according to any one of claims 1 to 5, wherein the first indication information is carried in downlink control information or a medium access control control element.

7. The method according to any one of claims 1 to 6, wherein the first indication information further comprises at least one of the following: an effective moment of the fourth power level indicated by the first indication information, an effective duration of the fourth power level indicated by the first indication information, and a start time and a duration of a timer, wherein the timer is used to determine a time for performing data scheduling based on the first indication information.

8. A power determining method, wherein the method comprises:
sending first indication information, wherein the first indication information indicates a power mode for data scheduling, or indicates a third power level, wherein
the power mode comprises a first power mode or a second power mode, the first power mode corresponds to a first power level, the second power mode corresponds to a second power level, and the first power level is higher than the second power level; and
receiving a first signal, wherein the first signal is sent at a fourth power level, and the fourth power level is determined based on the first indication information.

9. The method according to claim 8, wherein the method further comprises:
receiving second indication information, wherein the second indication information indicates whether the first power mode is supported, or indicates a fifth power level; and
determining the first indication information based on the second indication information.

10. The method according to claim 8 or 9, wherein the method further comprises:
receiving first information, wherein the first information comprises at least one of the following: a first remaining duration for which transmission is performed in the first power mode within a first time period, a second remaining duration for which the transmission is not allowed in the first power mode within the first time period, and a third remaining duration for which scheduling of uplink sending is not allowed within the first time period; and the first information is obtained based on proportion information of transmission in the first power mode within the first time period; and
determining the first indication information based on the first information.

11. The method according to claim 10, wherein the first information is based on a high reference power level.

12. The method according to any one of claims 8 to 11, wherein the method further comprises:
receiving third indication information, wherein the third indication information indicates a step size for adjusting the fourth power level, and/or a power headroom of a terminal device; and
determining the first indication information based on the third indication information.

13. The method according to any one of claims 8 to 12, wherein the first indication information is carried in downlink control information or a medium access control control element.

14. The method according to any one of claims 8 to 13, wherein the first indication information further comprises at least one of the following: an effective moment of the fourth power level indicated by the first indication information, an effective duration of the fourth power level indicated by the first indication information, and a start time and a duration of a timer, wherein the timer is configured to determine a time for performing data scheduling based on the first indication information.

15. A communication apparatus, comprising a unit configured to implement the method according to any one of claims 1 to 7, or comprising a unit configured to implement the method according to any one of claims 8 to 14.

16. A communication system, comprising a terminal device and a network device, wherein the terminal device is configured to perform the method according to any one of claims 1 to 7, and the network device is configured to perform the method according to any one of claims 8 to 14.

17. A communication apparatus, comprising a memory, a processor, and a computer program stored in the memory and executable on the processor, wherein the processor implements the method according to any one of claims 1 to 7 or the method according to any one of claims 8 to 14 when executing the computer program.

18. A computer-readable storage medium, wherein the computer-readable storage medium stores a computer program or instructions, and when the computer program or the instructions are executed, the method according to any one of claims 1 to 14 is performed.

19. A computer program product comprising instructions, wherein when the instructions are executed on a communication apparatus, the communication apparatus is caused to perform the method according to any one of claims 1 to 14.

20. A chip, wherein the chip is coupled to a memory, and the chip is configured to perform the method according to any one of claims 1 to 14.
